Europäisches Patentamt

**European Patent Office**

**Office européen des brevets**

(11) Publication number: **0 229 401**
**A1**

(12) **EUROPEAN PATENT APPLICATION**

(21) Application number: **86200051.0**

(22) Date of filing: **13.01.86**

(51) Int. Cl.³: **A 01 G 25/09**
**F 04 B 9/10**

(43) Date of publication of application:
**22.07.87 Bulletin 87/30**

(84) Designated Contracting States:
**AT BE CH DE FR GB IT LI LU NL SE**

(71) Applicant: **Faber, Pieter**
**De Meute 19**
**NL-8312 BH Creil (NOP)(NL)**

(72) Inventor: **Faber, Pieter**
**De Meute 19**
**NL-8312 BH Creil (NOP)(NL)**

(74) Representative: **'t Jong, Bastiaan Jacobus et al,**
**OCTROOIBUREAU ARNOLD & SIEDSMA Sweelinckplein**
**1**
**NL-2517 GK 's-Gravenhage(NL)**

(54) **Overhead irrigation device.**

(57) Overhead irrigation device comprising a frame (2), a hose reel (3) mounted for rotation on said frame, a feed line (5) for a liquid supplied under pressure coupled with a hose (4) on said hose reel and a rotary drive mechanism (6) for said reel, which comprises a motor (7) driven by the supplied liquid and a reel drive gear. Said motor comprises a cylinder (15), a piston (18) guided movably in said cylinder, a piston rod (20) connected to said piston guided through a sealing in an end wall of said cylinder and coupled with said reel drive gear, whereby said cylinder is accomodated axially in said feed line and in said piston is accomodated a valve (30) with a large passage (32) which in opened position allows a virtually unimpeded through-flow of the liquid and which, close to the respective end positions of said piston, at contact with a stop is opened and closed by the piston movement.

FIG.3

OVERHEAD IRRIGATION DEVICE

The invention relates to an overhead irrigation device as defined in the heading of claim 1. Such an irrigation device is used for irrigating a crop with water or manure. The liquid is supplied by a pump apparatus set up at a distance. The free end of the hose is connected with a spray device. At the start the hose is wholly or partially unreeled and the spray device is arranged at a distance from the overhead irrigation device. During operation the reel is slowly rotated by the rotary drive mechanism, whereby the hose is reeled in evenly so that an extensive area is automatically irrigated.

Known is the taking of the drive power for the drive mechanism from the liquid supplied under pressure. In known devices of the present type use is made of a turbine accomodated in the liquid feed line or of a bellows motor which extracts a quantity of liquid from the feed line and directly disposes of the used liquid.

These known devices are very sensitive to dirt and are very inefficient.

The purpose of the invention is to provide a device of the kind set forth above in which the motor operates at a high level of efficiency.

In an overhead irrigation device according to the invention this is achieved with the steps stated in the characteristic of claim 1. In the opened position of the valve a totally negligible loss of power occurs. Power absorbed when the valve is closed comes available to the piston rod with a high level of efficiency, in view of the fact that the power loss during the active stroke of the motor is caused only by friction of the piston in the cylinder. Moreover, in view of the fact that the active stroke need only take up a short period of the total cycle, the total efficiency of the motor is very favourable.

An extra advantage of the device according to the invention is that because of the large passage of the valve in the piston, the motor is not sensitive to dirt. By braking the slack return stroke of the piston in a suitable manner, the cycle duration and therefore the wind-in speed of the reel can be adjusted steplessly as required, without this costing extra power. The motor also takes up only just as much power from the liquid as is necessary. That is to say that when the hose is rolled out over a great distance, greater power is needed to wind in the reel than when the hose is virtually all but reeled in. The adaptation to the required power is inherent to the construction according to the invention.

A preferred embodiment is obtained using the characteristic of claim 2. As a result of the differential piston action, the piston is pressed back automatically by the liquid pressure to the starting position.

The valve at the end of the active stroke opens in a reliable manner when the step characterizing claim 3 is applied. At the end of the stroke the helical springs are tensioned until the valve disc is lifted from the seat counter to the liquid pressure. As soon as liquid begins to flow through the valve, the pressure on the valve disc decreases so that it is moved progressively away from the valve seat through the spring pressure.

Using the step according to claim 4 a constructively favourable embodiment is obtained.

Particularly when the step in claim 5 is thereby applied, the duration of the backward, slack stroke of the piston can be determined in a simple manner by a suitable choice of restriction. During the power stroke oil is fed via the non-return valve virtually without loss of power.

As mentioned, the power supplied by the motor is dependent on the momentary force necessary for the rotation of the reel. During the active stroke the pressure applied by the liquid on the valve disc is thus likewise variable. Using the step in claim 6 achieves that at all times, at the end of the active stroke, the same equilibrium of forces acts on the valve disc, so that valve release takes place in a reliable manner. A favourable embodiment of the pressure discharge device is that in the embodiment according to claim 7.

According to a further development, it is achieved using the step in claim 8 that the retracting speed of the hose is constant, irrespective of the momentary reel diameter of the hose. With increasing diameter the retracting speed would increase at a constant speed of rotation. However, by enlarging the throttling through the restriction the cycle time of the motor is increased and the drive speed of the reel thus reduced.

In order to prevent the spray device irrigating the same area for too long a time when there is a disturbance, the step according to the preferred embodiment in claim 9 is applied.

Further characteristics and advantages of the invention will become apparent from the following description of the embodiments with reference to the accompanying drawings.

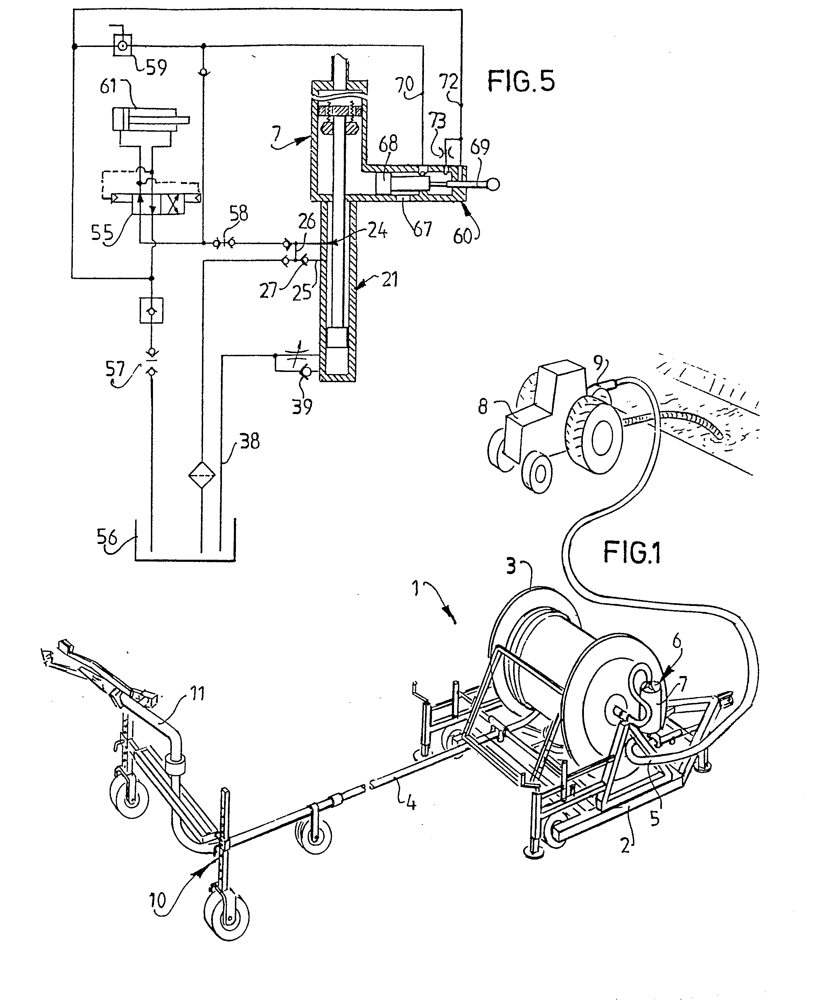

Fig. 1 shows in a schematic perpective view the overhead irrigation device according to the invention in operation.

Fig. 2 shows the overhead irrigation device from Fig. 1 partly broken away and on a larger scale.

Fig. 3 shows in longitudinal section the motor of the reel drive mechanism with the piston in the starting position.

Fig. 4 shows a partial cross-section view of the motor in Fig. 3 with the piston in the end position.

Fig. 5 shows the hydraulic circuit diagram of the drive mechanism of the device according to the invention.

Fig. 6 shows in partially broken away perspective view the ratchet drive of the reel.

Fig. 7 shows schematically a safety device according to the invention.

The overhead irrigation device 1 comprises a frame 2 on which a hose reel 3 is mounted for rotation. Reel 3 can accomodate a hose 4. Coupled to hose 4 is a feed line 5 for the liquid to be sprayed. In the application shown the liquid to be sprayed is water from a ditch, which is pumped into feed line 5 by means of a pump 9 driven by a tractor 8. The water is transported through hose 4 to a rotary spray cannon 11, in itself known, of a spray device 10.

Overhead irrigation device 1 is provided with a drive mechanism 6 for reeling in hose 4 during the operation of the device. As a result of reeling in of hose 4 spray device 10 is pulled towards irrigation device 1, whereby a rectangular area is evenly irrigated automatically.

Drive mechanism 6 comprises a motor 7 which absorbs drive energy from the liquid fed under pressure through line 5. As a result it is not necessary to use for example a separate diesel motor for driving of the reel.

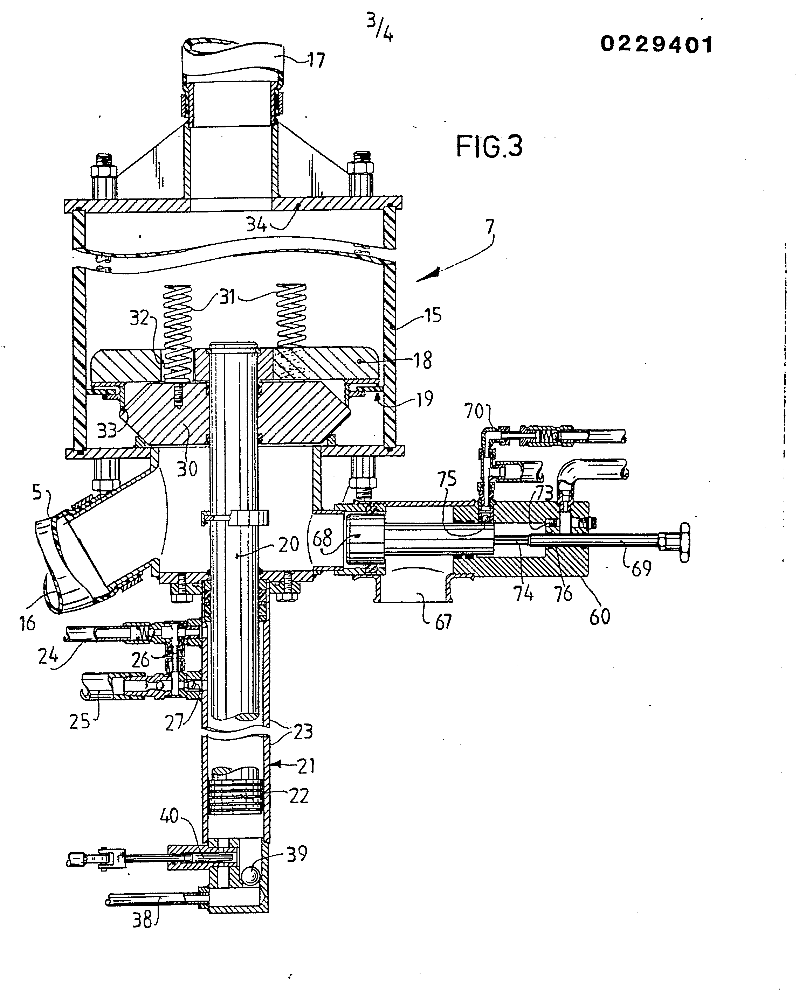

As Fig. 3 shows motor 7 comprises a cylinder 15 which is accomodated axially in feed line 5. That is to say, the liquid supplied through feed line 5 flows axially through cylinder 15. The liquid is fed through the inlet 16 and leaves cylinder 15 through the outlet 17 on the upper side. In cylinder 15 is accomodated a piston 18, which, sealed by means of a sealing 19, is guided slidably in the cylinder. Piston 18 is connected to a piston rod 20 which is coupled with the reel drive gear to be described later.

The piston comprises a valve seat 33 on the underside which co-operates with the edge of a valve disc 30, which is guided slidably around the piston rod.

In Fig. 3 piston 18 is located in the start position, in which valve disc 30 makes sealing contact with valve seat 33. Piston 18 with piston rod 20 is pushed upwards in the cylinder 15 by the water fed via inlet 16 under the piston. Through the pressure of the water valve disc 30 remains in sealing contact with valve seat 33. During the rising power stroke, power is extracted from piston rod 20 by the reel drive device.

Near the end of the rising stroke, helical springs 31 which are attached to valve disc 30 and project through bores 32 above piston 18, come into contact with the upper wall 34 of the cylinder. With further movement springs 31 are tensioned until the force applied by springs 31 on valve disc 30 in downward direction, in combination with the weight of valve disc 30 itself, is equal to the force applied by the water pressure in upward direction. From that moment valve disc 30 is released from valve seat 33 whereby water can pass through the cylinder via bores 32. As soon as the water begins to flow past valve seat 33, the upward force applied by the water on the valve disc diminishes, whereby springs 31 can press valve disc 30 abruptly free from valve seat 33, after which disc 30 slides under its own weight further downwards along the piston rod. The valve thus opens entirely and via the bores the water can pass the piston 18 to outlet 17.

For the sake of clarity only two springs 31 are shown in the drawings. A greater number of springs, however, for example six, is applied in an appropriate manner. The total through-flow section of openings 32 is so great that for the water the flow resistance in the opened position of the valve is negligibly small.

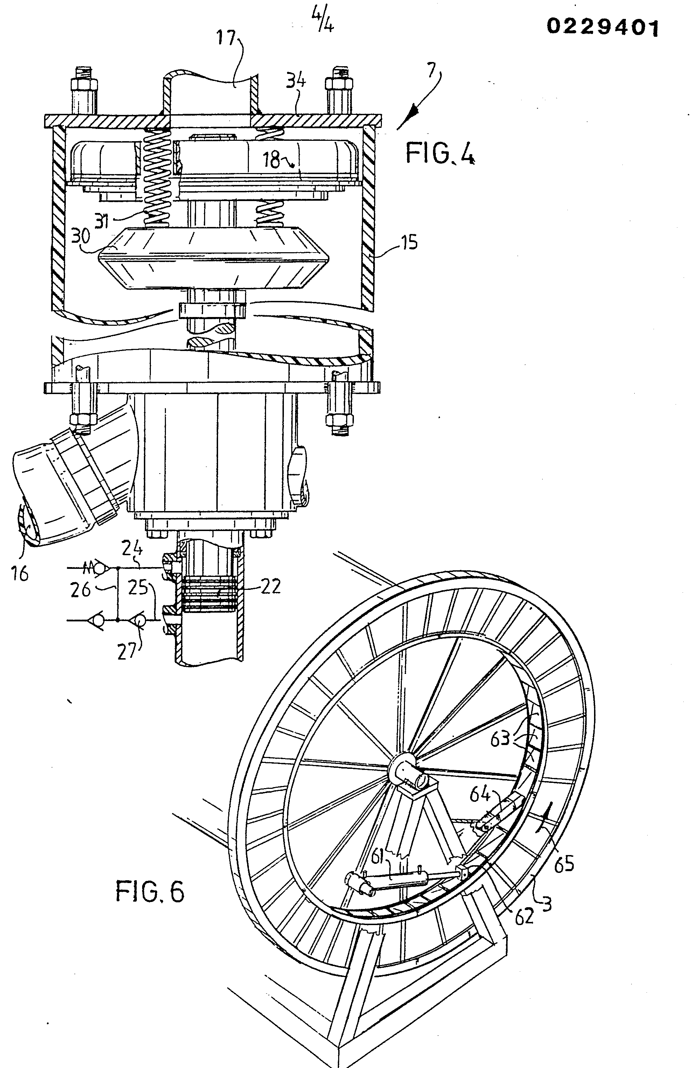

Because of the water pressure acting on the section of piston rod 20, the piston is then moved back again from the position shown in Fig. 4 to that shown in Fig. 3. At the end of this movement piston 18 again comes with its valve seat 33 into contact with valve disc 30, whereby the valve closes and the cycle described is repeated.

In the embodiment shown piston rod 20 of motor 7 is coupled with a hydraulic reciprocating pump 21. This comprises a pump cylinder 23 and a pump piston 22 arranged at the end of piston rod 20. As a result of the described reciprocating movement of piston rod 20 and thus of pump piston 22 oil is pressed hydraulically out of suction pipe 25 into pressure pipe 24.

As shown in Fig. 3 and 4, the connection for suction pipe 25 is arranged in pump cylinder 23 at an interval under the connection for pressure pipe 24, and between these pipes a bypass pipe 26 is arranged. As Fig. 4 shows, the spaces in pump cylinder 23 above and below pump piston 22 are connected to one another via bypass pipe 26 when motor piston 18 is situated close to its end position. There is, therefore, no difference in pressure over pump piston 22. In view of the fact that the force with which the water presses valve disc 30 against valve seat 33 is proportional to the pressure difference over pump piston 22, the pressure applied by the water on valve disc 30 in this end position is the same and slight under all operating conditions. The equilibrium of forces whereby lifting the valve occurs is therefore independent of the pressure generated during the active stroke. This results in the valve always being lifted in a reliable manner.

The space in pump cylinder 23 under pump piston 22 is linked by means of a connection 38 with the reservoir of hydraulic oil. During the upward stroke of pump piston 22 hydraulic oil is fed via connection 38 into cylinder 23 via non-return valve 39. During the downward stroke non-return valve 39 closes and the hydraulic oil is displaced via restriction 40 to connection 38. The duration of the downward stroke can therefore be adjusted using restriction 40. The wind-in speed of reel 3, which is dependent on the cycle duration of the motor, can as a result be adjusted.

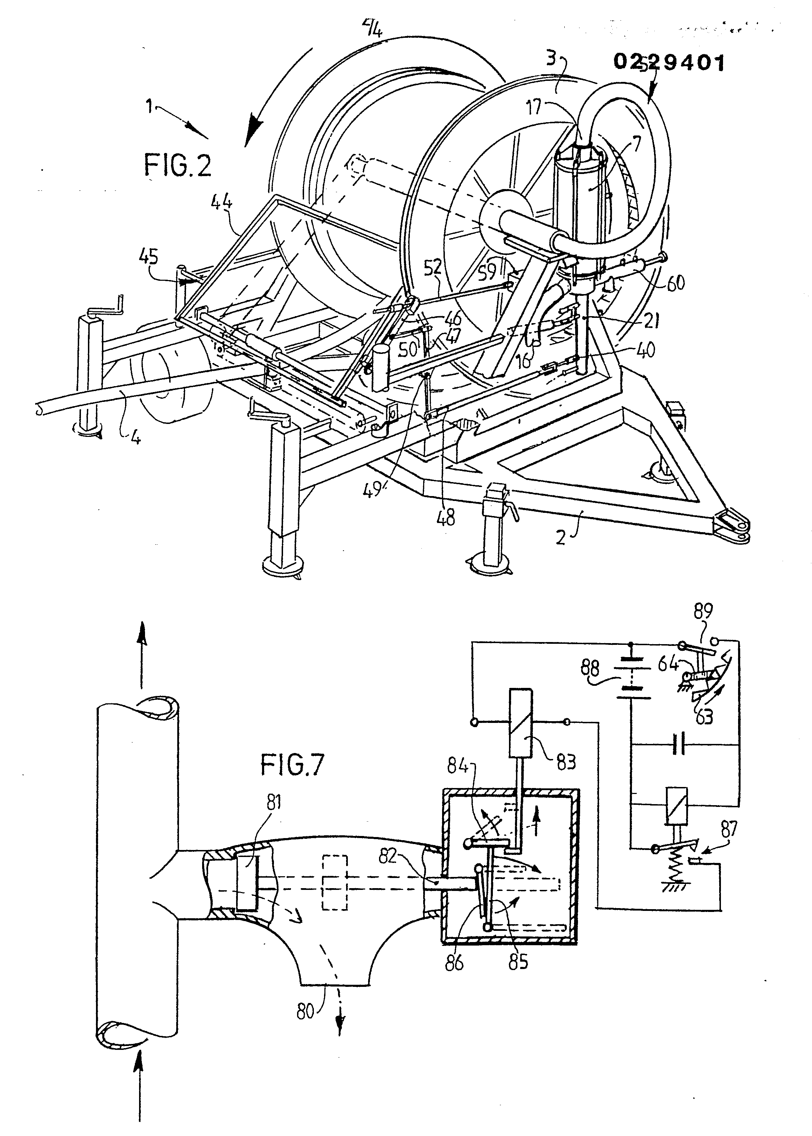

As is shown in Fig. 2, the device 1 comprises for this purpose a sensing frame 44 which is connected pivotably with the frame 2 by means of a hinge 45. The upper edge of this frame 44 lies against the hose wound in on reel 3. As the reel diameter of the hose increases sensing frame 44 tilts anti-clockwise as seen in Fig. 2. A rod 50 is connected for pivoting with an arm 46 which moves firmly with frame 44. The other end of rod 50 grips on a lever 47 coupled for pivoting through hinge 42 with frame 2. The other end of lever 47 relative to hinge 49 is again coupled for pivoting with a rod 48 which is coupled with the tapered pin of restriction 40.

With the increasing of the winding diameter and the anti-clockwise pivoting of sensing frame 44 pin 51 of restriction 40 is pushed inside, as a result of this rod transmission, into its bore whereby the throttling and thus the duration of the return stroke increases. Through suitable dimensioning of the rod transmission and the restriction is attained that the rotation speed of reel 3 is inversely proportional to the winding diameter and that therefore the retracting-speed of hose 4 is constant, irrespective of the winding diameter.

Fig. 5 shows the hydraulic diagram of device 1. Reciprocating pump 21, driven in the way described by water motor 7, pumps hydraulic oil out of reservoir 56 via suction pipe 25 into pressure pipe 24. As previously noted, bypass pipe 26 is arranged to ensure that the last part of the active stroke of the reciprocating pump takes place without pressure in view of the action of the motor. By way of non-return valve 27 which is accomodated in suction pipe 25 between the cylinder and the connection for bypass pipe 26 is achieved that during the slack return stroke, directly from the uppermost point, the influence of the damping obtained with restriction 40 becomes active. In the absence of this non-return valve 27 the motor/pump piston system would be able to move rapidly downwards over the first part of the return stroke, whereby motor piston 18 could possibly again come into contact with valve disc 30 and the passage through the motor piston could be closed off again.

Pressure pipe 24 is connected via a pressure controlled two-way valve 55 with drive cylinder 61. Such a pressure controlled two-way valve is in itself known and need not therefore be described at length. As soon as drive cylinder 61 has arrived at an end position as a result of the pressure and cannot move further, the pressure in the pressure pipe rises, whereby valve 55 reverses and the piston of cylinder 61 will move in reverse direction. In this way an automatic reciprocating movement of the piston rod of cylinder 61 is thus obtained.

8

As Fig. 6 shows, at the end of the piston rod of cylinder 61 is arranged a pressure piece 62 which can come to grip on a part of reel 3 in the form of a ratchet wheel 63. Onto this ratchet wheel 63 also grips a ratched 64 connected for pivoting with the frame of the device, which ratchet allows rotation of reel 3 in the direction of arrow 65, but prevents rotation in the opposite direction. During the outward stroke of drive cylinder 61 reel 3 is rotated over one or more "teeth" of ratchet wheel 63 after which, during the return stroke of cylinder 61, reel 3 is held in place by ratchet 64. In this way the reciprocating movement of pressure piece 62 of drive cylinder 61 is converted into a stepwise rotating movement of reel 3.

In the pressure and return pipes connected to valve 55 are accomodated quick action couplings 58 and 57 respectively, which are in themselves known. At the point of these couplings 58,57 the drive system for the reel can be disengaged from reciprocating pump 21 and an hydraulic pump driven for example by a tractor can be connected up. In this way reel 3 can be wound up quickly without irrigation taking place.

The device 1 according to the invention is provided with a safety device which stops the irrigation as soon as a disturbance occurs in the reel drive. This safety device cooperates with the safety device arranged in the usual way in pump 9, which switches off the drive of pump 9 as soon as pump pressure falls below a determined set value.

As Fig. 3 shows, the safety device according to one embodiment of the invention comprises a pressure relief valve 67 which takes the form of a piston valve and of which the piston 68 in operating conditions is under the influence of the pressure of the water for spraying fed in through connection 16. Piston 68 is held in the position shown closing valve 67 with the aid of the safety cylinder 60 in which oil under pressure from the hydraulic system applies an opposed force onto the rod of piston 68. Safety cylinder 60 is provided with a pressure conduit 70 and a discharge conduit 72 which are connected in the way shown in Fig. 5 with the pressure pipe and reservoir respectively. The oil fed under pressure via conduit 70 into cylinder 60 flows via a restriction 73 to discharge conduit 72.

The safety device operates as follows:

After setting up of the device 1 the operator, before starting water pump 9, pushes piston 68 into the position shown in Fig. 3, using the push rod 69. At that moment water is not yet being supplied, so that no forces are acting on piston 68 because of lack of water pressure and therefore also of oil pressure. When pump 9 is switched on and water is thereby fed under pressure, motor 7 comes into operation, whereby hydraulic pressure is built up with reciprocating pump 21, as a result of which the forces acting on piston 68 remain in equilibrium. If the oil pressure now drops off, piston 68 will be pushed to the right by the water pressure, whereby it pushes away oil in safety cylinder 60 via restriction 73 into discharge conduit 72. As soon as a narrowed portion 74 of push rod 69 projects over a determined distance into the bore 76 in cylinder 60, a direct connection will be formed between the cylinder space and discharge conduit 72 whereby restriction 73 is bypassed. Piston 68 can as a result move abruptly to the right, so that pressure relief valve 67 thus opens. As a result the pressure in the feed line of pump 9 falls, at which point the said safety device of this pump 9 comes into operation and stops the supply of water.

As Fig. 3 shows, in feed line 70 still a ball valve 75 is accomodated, the ball of which is activated by the end of piston 68. When the winding up of reel 3 meets much resistance a high oil pressure is automatically generated in the hydraulic system in the manner previously described. At the resulting maximum oil pressure, leakage via restriction 73 would assume undesirably large proportions. Since under high hydraulic oil pressure piston 68 is moved to the left, piston 68 disconnects from ball 75 which then closes off the supply of oil through line 70. An equilibrium is thus established in a known manner, whereby an acceptably small leakage flow of oil occurs through restriction 73.

Use is likewise made of the above described safety device for switching off the device when irrigation is completed, i.e. when hose 4 is wound onto reel 3 and the spray device has been pulled back as far as frame 2. For this purpose a second rod 52 is connected with the arm 46 of sensing frame 44, which rod activates ball valve 59. In the position of sensing frame 44 corresponding with the wholly wound up hose 4, ball valve 59, which is normally closed, is opened. As Fig. 5 shows, ball valve 59 hereby short circuits lines 70 and 72 so that no oil under pressure is fed to the safety cylinder 60, and the previously described safety device comes into operation. Ball valve 59 is actually connected onto the line 71 shown in Fig. 3.

Instead of the hydraulic control means described for pressure relief valve 67, the safety/pressure relief valve can also be controlled electrically in an appropriate manner. This control is shown schematically in Fig. 7.

The pressure relief valve 80 again comprises a piston 81, of which the piston rod 82 can be blocked by control means. In order to be able to release the pressure relief valve using relatively little force, a lever transmission mechanism is arranged, formed by levers 84, 85, 86. In the closed position of valve 80 piston rod 82 rests against lever 86 quite close to its point of rotation. The free end of lever 86 rests against lever 85 close to its point of rotation. The free end of lever 85 is held in place by lever 84. Lever 84 can be pivoted away by the electro-magnet 83 in the direction indicated by the arrows. This in turn results in levers 84 and 85 respectively pivoting away in the directions indicated by the arrows, whereby piston rod 82 can assume the position indicated by dashed lines, as a result of which piston 81 linked thereto can open pressure relief valve 80.

Electro-magnet 83 is controlled with the aid of a delayed action relay 87 which in activated state holds open a control contact pair. The relay is kept in the activated state using a pulsating supply voltage which is generated with the aid of a switch 82 controlled by ratchet 64. When reel 3 is rotated, and with it ratchet wheel 63, ratchet 64 moves periodically up and downward, whereby switch 89 is periodically closed. In the closed position of switch 89 an electrical supply voltage is fed from the battery 88 to the coil of the relay and the condenser in parallel circuit with it. The circuit is thereby so dimensioned, that under normal operating conditions relay 87 remains energized by the pulsating or intermittent supply.

If a disturbance were now to occur in the reel drive, whereby reel 3 no longer rotates, switch 89 is no longer activated and the pulsating supply voltage for the relay is therefore interrupted. As a result relay 87 is de-activated after a period of time, whereby electro-magnet 83 is energized and pressure relief valve 80 opens. This has the result that, in the previously described manner, the safety device of pump 9 comes into operation and the supply of water under pressure is stopped. The safeguards described thus prevent the spray device 10 from continuing to irrigate one determined area for too long as a result of a disturbance.

Claims

1. Overhead irrigation device comprising a frame, a hose reel mounted for rotation on said frame, a feed line for a liquid supplied under pressure coupled with a hose on said hose reel and a rotary drive mechanism for said reel, which comprises a motor driven by the supplied liquid and a reel drive gear, c h a r a c t e r i z e d in that said motor comprises a cylinder, a piston guided movably in said cylinder, a piston rod connected to said piston guided through a sealing in an end wall of said cylinder and coupled with said reel drive gear, whereby said cylinder is accomodated axially in said feed line and in said piston is accomodated a valve with a large passage which in opened position allows a virtually unimpeded through-flow of the liquid and which, close to the respective end positions of said piston, at contact with a stop is opened and closed by the piston movement.

2. Device as claimed in claim 1, c h a r a c t e r i z e d in that the cylinder is accomodated in the feed line such that the liquid is fed into said cylinder on the side close to the end wall through which the piston rod extends.

3. Device as claimed in claim 1 or 2, c h a r a c t e r i z e d in that the valve comprises a valve disc slidable around the piston rod, that the piston comprises a substantially axial valve seat co-operating with said valve disc, and that said valve disc is provided with a number of helical springs projecting outside the side of the piston opposed to said valve seat in the closed position of said valve.

4. Device as claimed in any of the preceding claims, c h a r a c t e r i z e d in that the piston rod is coupled with the pump piston of a reciprocating hydraulic piston pump, the pump cylinder of which is connected with the end wall.

5. Device as claimed in claim 4, c h a r a c t e r - i z e d in that the pump cylinder comprises pressure and suction connections on the side of the piston connected with the piston rod and is connected on the other side with a reservoir of hydraulic oil via a restriction and a non-return valve freely allowing supply to the cylinder in parallel connection.

6. Device as claimed in claim 4 or 5, c h a r a c - t e r i z e d in that the reciprocating pump comprises a pressure discharge device which comes into operation towards the end of the active stroke.

7. Device as claimed in claim 6, c h a r a c t e r - i z e d in that the discharge device comprises a bypass line which is arranged between the pressure port and a discharge port which is arranged at a height situated behind the piston as it moves towards the end of its active stroke.

8. Device as claimed in claim 5, c h a r a c t e r - i z e d in that the restriction is adjustable and is controlled by a sensor detecting the momentary wound-in diameter of the hose in the sense of a reduction of passage with increasing winding diameter.

9. Device as claimed in any of the preceding claims, c h a r a c t e r i z e d by a pressure relief valve connected to the liquid feed side, which valve takes the form of a plunger valve held in closed position by control means.

10. Device as claimed in claim 9, c h a r a c t e r - i z e d in that the control means comprise a hydraulic piston/cylinder device connected via a pressure line with the pressure of the reciprocating pump and via a restriction with the reservoir pressure.

11. Device as claimed in claim 9, c h a r a c t e r - i z e d in that the control means comprise an electro-magnet activated by a delayed action relay, whereby said relay is fed by a control generating a pulsating supply voltage during rotation of the reel.

1/4

FIG.5

FIG.1

12894-

FIG.2

0229401

FIG.7

0229401

FIG.3

FIG. 4

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 199 523 (BERRIER) <br> * Whole document * | 1 | A 01 G 25/09 <br> F 04 B 9/10 |
| A | FR-A-2 326 972 (IPLEX PLASTIC INDUSTRIES) <br> * Page 3, line 26 - page 5, line 33; figures 1,2 * | 1,3,4 | |
| A | FR-A-2 329 980 (ECONOMICS LABORATORY) <br> * Page 2, line 14 - page 5, line 5; figure 1 * | 1,3,4 | |
| A | FR-A-2 134 753 (DI PALMA) <br> * Page 6, line 10 - page 7, line 7; claim 1; figures 2,6 * | 1 | |

TECHNICAL FIELDS
SEARCHED (Int. Cl.4)

A 01 G
F 03 C
F 04 B

The present search report has been drawn up for all claims

| Place of search | Date of completion of the search | Examiner |
|---|---|---|
| THE HAGUE | 12-09-1986 | HERYGERS J.J. |